**Europäisches Patentamt**

**European Patent Office**

**Office européen des brevets**

(19)

(11) Publication number: **0 172 328**
**B1**

## (12) EUROPEAN PATENT SPECIFICATION

(45) Date of publication of patent specification: **13.09.89**

(51) Int. Cl.⁴: **G 01 M 11/00**

(21) Application number: **85106834.6**

(22) Date of filing: **03.06.85**

(54) **Process and equipment for measuring the cut-off wavelength of the first higher order mode in optical fibres.**

(30) Priority: **05.06.84 IT 6758084**

(43) Date of publication of application:
**26.02.86 Bulletin 86/09**

(45) Publication of the grant of the patent:
**13.09.89 Bulletin 89/37**

(84) Designated Contracting States:
**DE FR GB NL**

(56) References cited:
**DE-A-3 039 088**

**OPTICAL COMMUNICATION, ECOC '84, 10TH EUROPEAN CONFERENCE ON OPTICAL COMMUNICATION, Stuttgart, DE, 3rd-6th September 1984, pages 120,121, North-Holland, Amsterdam, NL; G. COPPA et al.: "A new method for cut-off measurements in monomode fibres"**

(73) Proprietor: **CSELT Centro Studi e Laboratori Telecomunicazioni S.p.A.**
**Via Guglielmo Reiss Romoli, 274**
**I-10148 Turin (IT)**

(72) Inventor: **Coppa, Gianni**
**Viale alla Vittora, 40**
**Asti (AT) (IT)**
Inventor: **Di Vita, Pietro**
**C.so Francia, 357**
**Torino (IT)**

(74) Representative: **Riederer Freiherr von Paar zu Schönau, Anton et al**
**Van der Werth, Lederer & Riederer Freyung 615**
**Postfach 2664**
**D-8300 Landshut (DE)**

(56) References cited:
**PATENTS ABSTRACTS OF JAPAN, vol. 8, no. 38 (P-255)1475r, 18th February 1984; & JP-A-58 191 950 (NIPPON DENSHIN DENWA KOSHA) 09-11-1983**

Courier Press, Leamington Spa, England.

(58) References cited:
**OPTICS LETTERS, vol. 9, no. 7, July 1984, pages 303-305, Optical Society of America, New York, US; M. OHASHI et al.: "LP11 mode loss measurements in the two-mode-propagation region of optical fibers"**

## Description

The present invention refers to optical fibres for telecommunications and in particular to a process and equipment for measuring the cut-off wavelength of the first higher order mode.

Nowadays, monomode fibres (i.e. fibres capable of propagating only one electromagnetic mode, the fundamental mode) are usually used for telecommunications, as they present low attenuation and high capacity in terms of information that can be transmitted in the time unit. As known, propagation characteristics and the number of modes guided in a fibre highly depend on normalised frequency V, depending on its turn on radius a of fibre core, maximum numeric aperture $\Delta$ and operation wavelength $\lambda$ according to relation

$$V = 2\pi \cdot a \cdot \Delta/\lambda.$$

In particular a value $V_0$ exists above which (and then a wavelength $\lambda_0$ under which) the fibre acts no longer as a monomode fibre because, under those conditions, other modes, besides the fundamental mode, can propagate. As the advantage stated highly depend on fibre monomodality, the precise knowledge of $V_0$ or $\lambda_0$ is of interest.

The value of $\lambda_0$ could be obtained from value $V_0$, determined on its turn from the fibre refractive index profile. Nevertheless, the accurate determination of the refractive index profile requires sophisticated measurements and, besides, the value obtained can present a poor practical interest. In fact, the practical use value is an effective value which strictly depends on environment conditions: hence, the value determined could require empirical corrections. Then, advantageously the effective value of $\lambda_0$ should be directly measured.

An accurate measurement of $\lambda_0$ should be based on the determination of the power fraction guided in the fundamental mode by a fibre trunk under test, versus wavelength; in such a way the decrease in the power guided in the higher order mode can be quantitatively observed, and the cut-off wavelength can be defined as the wavelength where the power fraction guided in the fundamental mode exceeds a value pre-established (e.g. 90% for a fibre trunk 2m long) so that the power guided in the higher order mode becomes neglectable.

Some methods of cut-off wavelength measurement based on this determination are already known. A first example is described in the paper "Une technique nouvelle pour la mesure de la longueur d'onde de coupure des fibres monomodes" presented by G. Grosso, P. Spano, G. De Marchis, at the 8th ECOC, Cannes, 21—24 September 1982 and published at pages 98—101 of the conference proceedings.

This method determines the relative power fraction guided in the different modes through coherence measurements on the electromagnetic field at the output end of the fibre under examination; accurate values of the cut-off wavelength are obtained, but quite sophisticated equipment is required.

A second method is described by the inventors in the paper "Polarization measurement of cut-off wavelength in monomode fibres" presented at the 9th ECOC, Geneva, 23—26, October 1983, and published at pages 193—196 of the conference proceedings.

This method takes advantage of the different polarization properties of the fundamental mode with respect to the higher order modes and can be implemented with a simple measurement equipment, but the physical conditions of the fibre under test must be accurately controlled; hence the measurement is long and then expensive.

Conversely, the present invention proposes a method requiring neither sophisticated equipment nor long controls on fibre conditions.

This invention is based on the introduction of controlled perturbations on the fibre under test, so as to cause losses only interesting the first higher order mode (or higher order modes); this method allows not only cut-off wavelength to be determined, but also quantitative information to be obtained on such losses; this can be useful in fibre characterization during manufacturing.

Methods for cut-off wavelength measurement requiring the introduction of a perturbation (in particular a full turn) in a fibre under test, have already been proposed.

A first method, described by Y. Katsuyama, M. Takuda, N. Uchida, M. Nakahare in the article "New method for measuring V-value of a single mode optical fibre" in "Electronics Letters" Vo. 12, No. 25, 9 December 1976, does not determine the power guided by the fundamental mode, but detects the attenuation peaks, due to the perturbation, in correspondence of the cut-off wavelengths of the different modes. Being rather large the peak relative to the first higher order mode, the measurement is quite undetermined and then the results are quite inaccurate; furthermore, results highly depend on perturbation characteristics, which are reproducible with difficulty.

A second method, known from Patent Abstracts of Japan, Vol. 8, No. 38, page 255, (1475), 18.2.1984, uses five measurements, whereby the fibre is to be cut for part of these measurements. Thus, the method is destructive.

Starting out from this latter prior art, the invention is to provide for a non-destructive measurement process which leads to precise and reproducible results. The essential characteristics of the invention are defined in claim 1, as regards the process, and in claim 5, as regards the equipment. An essential feature, thus, is that the third perturbation condition is obtained by superposition of the second alteration to the second perturbation condition. Preferred features are disclosed in claims 2 to 4 and 6 to 9, respectively.

The invention will become more apparent with reference to the accompanying drawings, where:

Fig. 1 is a schematic representation of the equipment, which implements the process according to the invention;

Fig. 2 is a possible example of the means which introduce a controlled perturbation on the fibre, and

Figs. 3 and 4 are graphics illustrating the results of a measurement taken according to the invention.

Before describing the equipment, the process object of the invention will be illustrated.

For a given wavelength, we indicate by:

—$P_0$ the power guided by the fundamental mode (mode $LP_{01}$);

—$P_1$ the power guided by the higher order mode (generally, mode $LP_{11}$).

The power fraction propagating in the fundamental mode is then:

$$\varepsilon(\lambda)=\frac{P_0}{P_0+P_1}$$

In order to obtain this fraction, according to the invention controlled perturbations are introduced into the fibre, so as to cause neither mode conversions nor significant losses in the fundamental mode; $\varepsilon(\lambda)$-value can be obtained through different measurements of power W transmitted in the fibre under different perturbation conditions and combining the results. In particular, a measurement of the power transmitted in the absence of perturbations gives the following value

$$W=K(P_0+P_1) \qquad (1)$$

A second measurement, carried out introducing along the fibre a first perturbation A, gives the following value for the power transmitted:

$$W_a=K[P_0+P_1\exp(-\gamma a)] \qquad (2)$$

where $\gamma_a$ is the loss undergone by the higher order mode(s) because of perturbation A.

A third measurement carried out in the presence also of a second perturbation B along the fibre, gives value:

$$W_{ab}=K[P_0+P_1\exp(-\gamma_a-\gamma_b)] \qquad (3)$$

where $\gamma_b$ is the loss undergone by higher order mode(s) because of perturbation B.

Finally, another measurement carried out in the presence only of perturbations B, gives value:

$$W_b=K[P_0+P_1\exp(-\gamma_b)] \qquad (4)$$

Obviously, the latter measurement is unnecessary if perturbation B is identical to A, as $W_a=W_b$; as shown by the equipment description, the introduction of two identical perturbations on the fibre is not a problem.

By simple mathematical operations, the preceding relations give:

$$\varepsilon(\gamma)=\frac{P_0}{P_0+P_1}=\frac{WW_{ab}-W_aW_b}{W(W-W_a-W_b+W_{ab})} \qquad (5)$$

Furthermore, the same measurements give also loss coefficients $\gamma_a$, $\gamma_b$. In particular:

$$\gamma_a=-\log[(W_{ab}-W_a)/(W_b-W)]$$

$$\gamma_b=-\log[(W_{ab}-W_b)/(Wa-W)] \qquad (6)$$

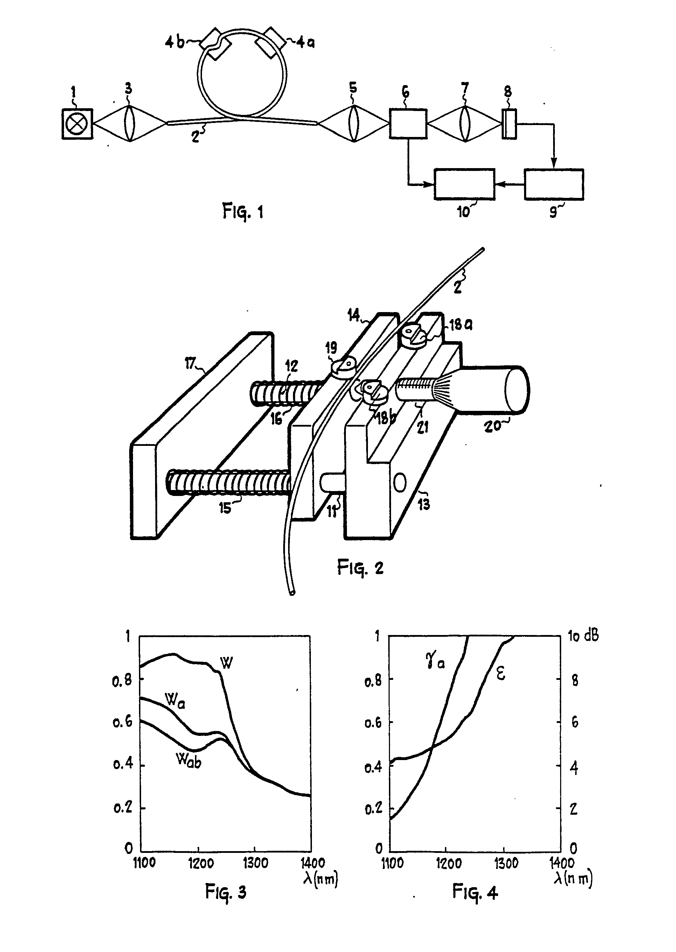

With reference to Fig. 1, a source of light 1, comprising radiations at the wavelengths usually used for optical fibre transmission, lights an end of a fibre trunk 2 and is focused on said end through a suitable optical system 3. Fibre 2 in its path passes within a couple of devices 4a, 4b which allow the fibre to undergo controlled perturbations or to be left unperturbed.

The light outgoing from the fibre is focused, through a second optical systems 5, on a monochromator 6 which allows monochromatic radiations at different wavelengths to be isolated from the light. Obviously, monochromator 6 could also be placed upstream fibre 2 under test. Monochromatic radiations outgoing from monochromator 6 are focused, through a third optical system 7, on a photodetector 8, connected to means 9 for determining the power of the electrical signal outgoing from the photodetector, followed on their turn by a calculator 10 for measuring both power fraction $\varepsilon(\lambda)$ guided in the fundamental mode at different wavelengths, according to relation (5), and the losses at higher modes, according to relation (6). If necessary, $\varepsilon(\lambda)$ behaviour can also be displayed.

A very simple way for obtaining the perturbation of fibre 2 under examination can consists in causing the fibre to follow a serpentine path with very small bending radii. In this case, each of devices 4a, 4b can have the structure shown in Fig. 2. Two devices like that shown in Fig. 2 are arranged in series along the fibre path.

A couple of plates 13, 14 is mounted on a couple of horizontal guides 11, 12: the first plate is fixed, while the second plate can be moved along guides 11, 12 against the action of springs 15, 16 of which an end presses against the plate, while the other abuts against a second fixed element 17 solid with the guides. The two plates present two roller groups (e.g. two rollers 18a, 18b on fixed plate 13 and a roller 19 on mobile plate 14) with parallel axes, and the fibre is made to pass between said rollers. Mobile plate 14 can be displaced by a micromanipulator 20 mounted on fixed plate 13 and presenting a graduated scale 21 allowing displacement control. By this displacement, the rollers engage the fibre and cause it to follow a serpentine path therebetween. For sake of simplicity, the means keeping fibre 2 between the rollers are not shown.

Using the device described, the process according to the invention is implemented as follows: the fibre is placed between the rollers of devices 4a, 4b which first are left at such a distance that no perturbation is introduced in fibre 2. This condition of devices 4a, 4b is shown in Fig. 2. The light of source 1 is sent to fibre 2, outgoing power W at different wavelengths is measured and the values obtained are stored in calculator 10.

Then, through device 4a the first perturbation is introduced in fibre 2 moving supports 13, 14 of rollers 18a, 18b, 19 nearer through micromanipulator 20, so that the fibre makes a serpentine path as shown at 4b in Fig. 1 between the rollers 18b, 19, 18a which project somewhat from the support members 13, 14 so as to constrain the fibre to follow such a serpentine, and the values of Wa at different wavelengths are measured and stored. A second measurement is then effected by leaving device 4a operated to introduce the first perturbation and by operating also device 4b so as to introduce also the second perturbation. The second measurement supplies values $W_{ab}$.

Micromanipulator 20 with a graduated scale 21 makes it easy to control that the support of rollers of devices 4b and 4a are at the very same distance: then, the second perturbation is identical to the first and a fourth measurement in the presence of the only second perturbation is no longer necessary.

Now, the values of W, $W_a$ (=$W_b$), $W_{ab}$ at different wavelengths are stored in calculator 10 which can obtain, according to relation (5), the value of $\varepsilon(\lambda)$, detect the wavelength where $\varepsilon(\lambda)$ reaches the value established and supply, according to relations (6), the values of loss $\gamma_a$ (=$\gamma_b$) of higher order mode.

Previous description shows that the measurement of $\lambda_0$ requires neither sophisticated equipment nor long control operations. In fact, all equipment components are commonly used in optical measurements or implemented with easily available parts. Furthermore, the only manual operation (which can be automatized) is the adjustment of the position of rollers 18, 19 in order to introduce the different perturbations, this being a quite rapid operation. All other operations are automatically carried out by calculator 10.

Figs. 3 and 4 show W, $W_a$, $W_{ab}$ and $\gamma_a$, $\varepsilon(\lambda)$ versus wavelength (in nanometers), for a fibre whose cut-off wavelength (defined as above) is 1280 nm.

In Fig. 3 the ordinates are in arbitrary units and in Fig. 4 the left ordinate refers to values of $\varepsilon$ and the right ordinate to attenuation $\gamma$, expressed in dB.

Graphics are self-explanatory and require no further detailed description.

The above description is given only by way of non limiting example and several modifications and changements may be carried out without going of the scope of the invention as defined in the appended claims.

In particular, even if the description refers to a perturbation obtained by constraining the fibre in a serpentine path, the fibre can undergo any other perturbation which changes in a controllable and repeatable way its mechanical and/or geometrical characteristics (for example, a compression).

## Claims

1. Process for measuring the cut-off wavelength of the first higher order mode in optical fibres, where a fibre (2) is lighted by radiations at different wavelengths, a spectral scanning of the output power of the fibre is effected under at least three different perturbation conditions, the first condition being obtained in the absence of perturbations and the second and the third conditions being obtained with the introduction of first and second mechanical and/or geometrical alterations of known characteristics, which do not bring about mode inversion and attenuation in the fundamental mode, the values of the output power at the different conditions are stored and the power fraction guided is obtained from a combination of said values, characterized in that the third perturbation condition is obtained by the addition of the second mechanical and/or geometrical alteration to the second perturbation condition over the same length of fibre.

2. Process according to claim 1, characterized in that the first and second alterations are identical.

3. Process according to claim 1, characterized in that the first and second alterations are different and a further spectral scanning of the output power of the fibre (2) is carried out in a fourth perturbation condition, obtained by introducing in the fibre (2) the second alteration only.

4. Process according to any of the previous claims, characterized in that each alteration is obtained by constraining the fibre in a serpentine path.

5. Equipment for carrying out the process according to any of claims 1 to 4, comprising a light source (1) which sends to the fibre (2) under test radiations at different wavelengths, a monochromator (6) which selects the different wavelengths, and a photodetector (8) which receives the radiations outgoing from the fibre (2) and transforms them into an electric signal and is associated with a measurement and calculation system (9, 10) which measures the power of the electric signal at the different wavelengths and obtains therefrom the power fraction guided in the fundamental mode, the measurement and calculation system (9, 10) being arranged to obtain said power fraction from values of the power of the electric signal obtained, for each wavelength, under three different perturbation conditions at least, characterized in that a couple of devices (4a, 4b), in which the fibre (2) passes, is placed along the fibre, these devices being separately operable for the introduction in the fibre of perturbations in controlled and repeatable way, and in that the two devices (4a, 4b) are inactive in the first perturbation condition while in the second condition only one device is active and in the third condition both devices (4a, 4b) are active.

6. Equipment according to claim 5, characterized in that the devices (4a, 4b) introduce equal perturbations in the fibre (2) under test.

7. Equipment according to claims 5 or 6, characterized in that the devices (4a, 4b) introduce in the fibre bendings with very small radii.

8. Equipment according to claim 7, characterized in that the devices (4a, 4b) comprise two groups (18a, 18b, 19) of facing cylinder faces such as rollers which define a guide within which the fibre (2) under examination passes, one of the two groups being placed on a mobile support (14) associated with means (20, 21) which vary the distance between the two groups of cylinder faces (18a, 18b, 19) and indicate the distance value.

9. Equipment according to any of claims 5 to 8, characterized in that the measurement and calculation system (9, 10) can obtain, from the values of the power of the electric signal calculated at different perturbation conditions, also the values $(\gamma_a, \gamma_b)$ of the attenuations brought about by each perturbation on the higher order modes.

## Patentansprüche

1. Verfahren zum Messen der Grenzwellenlänge des ersten Modus höherer Ordnung in optischen Fasern, wobei man eine Faser (2) mit Sprahlungen unterschiedlicher Wellenlänge mit Licht beschickt und eine spektrale Abtastung der Ausgangsleitung der Faser unter wenigstens drei verschiedenen Störungsbedingungen durchführt, von denen die erste bei Nichtvorhandensein einer Störung vorliegt und man die zweite und die dritte durch Einführen einer ersten bzw. zweiten mechanischen und/oder geometrischen Änderung bekannter Charakteristiken, die keine Modusinversion und keine Dämpfung im Grundmodus bewirkt, erhält, wobei man die Werte der Ausgangsleitung bei den verschiedenen Bedingungen speichert und den durchgeleiteten Leistungsbruchteil aus einer Kombination dieser Werte erhält, dadurch gekennzeichnet, daß man die dritte Störungsbedingung durch Hinzufügung der zweiten mechanischen und/oder geometrischen Änderung zur zweiten Störungsbedingung über der selben Faserlänge erhält.

2. Verfahren nach Anspruch 1, dadurch gekennzeichnet, daß die erste Änderung und die zweite Änderung identisch sind.

3. Verfahren nach Anspruch 1, dadurch gekennzeichnet, daß die erste Änderung und die zweite Änderung unterschiedlich sind und man eine weitere spektrale Abtastung der Ausgangsleistung der Faser (2) unter einer vierten Störungsbedingung durchführt, die man dadurch erhält, daß man die Faser (2) nur der zweiten Änderung unterwirft.

4. Verfahren nach einem der vorhergehenden Ansprüche, dadurch gekennzeichnet, daß man jede der Änderungen durch zwangsweises Legen der Faser entlang einer Schlangenlinie erhält.

5. anordnung zur Durchführung des Verfahrens nach einem der Ansprüche 1 bis 4, mit einer Lichtquelle (1), die zur getesteten Faser (2) Sprahlungen unterschiedlicher Wellenlängen sendet, einem Monochromator (6), der die verschiedenen Wellenlängen auswählt, und einem Fotodetektor (8), der die von der Faser (2) ausgehenden Strahlungen empfängt, sie in ein elektrisches Signal umwandelt und selbst mit einem Meß- und Rechensystem (9, 10) verbunden ist, das die Leistung des elektrischen Signals bei den verschiedenen Wellenlängen mißt und hieraus den im Grundmodus durchgeleiteten Leistungsbruchteil erhält, wobei das Meß- und Rechensystem (9, 10) gemäß seinem Aufbau den Wert dieses durchgeleiteten Leistungsbruchteils aus den Leistungswerten des erhaltenen elektrischen Signals für jede Wellenlänge unter wenigstens drei verschiedenen Störungsbedingungen erhält, dadurch gekennzeichnet, daß entlang der Faser zwei Vorrichtungen (4a, 4b) angeordnet sind, in denen die Faser (2) hindurchverläuft und die getrennt für das Einführen von kontrollierten und reproduzierbaren Störungen in der Faser betätigbar sind; und daß in der ersten Störungsbedingung die beiden Vorrichtungen (4a, 4b) unaktiv sind, während in der zweiten Störungsbedingung nur eine der Vorrichtungen aktiv ist und in der dritten Störungsbedingung beide Vorrichtungen aktiv sind.

6. Anordnung nach Anspruch 5, dadurch gekennzeichnet, daß die Vorrichtungen (4a, 4b) in der zu testenden Faser (4) gleiche Störungen einführen.

7. Vorrichtung nach Anspruch 5 oder 6, dadurch gekennzeichnet, daß die Vorrichtungen (4a, 4b) in der Faser Biegungen mit sehr kleinem erzeugen.

8. Anordnung nach Anspruch 7, dadurch gekennzeichnet, daß zu den Vorrichtungen (4a, 4b) zwei Gruppen (18a, 18b, 19) von einander gegenüberliegenden Zylinderflächen wie Rollen gehören, die eine Führungsbahn begrenzen, innerhalb derer die zu testende Faser (2) durchläuft, wobei eine der beiden Gruppen auf einem beweglichen Träger (14) angeordnet ist, dem Mittel (20, 21) zur Verstellung des Abstands zwischen den beiden Gruppen von Zylinderflächen (18a, 18b, 19) zugeordnet sind, die den Abstandswert anzeigen.

9. Anordnung nach einem der Ansprüche 5 bis 8, dadurch gekennzeichnet, daß das Meß- und Rechensystem (9, 10) aus den Werten der für verschiedene Störungsbedingungen berechneten Leistung des elektrischen Signals auch die Werte $(\gamma_a, \gamma_b)$ der durch jede der Störungen an den Moden höherer Ordnung sich ergebenden Dämpfung erhalten können.

## Revendications

1. Procédé de mesure de la longueur d'onde de coupure du premier mode d'ordre supérieure dans les fibres optiques, où l'on éclaire une fibre (2) par des radiations de longueurs d'onde différentes, on effectue un balayage spectral de la puissance de sortie de la fibre (2) au moins sous trois conditions de perturbation différentes, la première condition étant obtenue en l'absence de perturbations, et la deuxième et la troisième condition étant obtenues avec l'introduction d'une première et d'une seconde altération mécanique et/ou géométrique de caractéristiques connues n'impliquant ni inversion de modes ni atténuation dans le mode fondamental, on mémorise les valeurs de la puissance de sortie dans les différentes conditions et on obtient la fraction de puissance guidée à partir d'une combinaison de ces valeurs, caractérisé en ce que la troisième condition de perturbation est obtenue par addition de la seconde altération mécanique et/ou géométrique à la deuxième condition de perturbation sur le même tronçon de fibre.

2. Procédé selon la revendication 1, caractérisé en ce que la première et la seconde altération sont identiques.

3. Procédé selon la revendication 1, caractérisé en ce que la première et la seconde altération sont différentes et on effectue un autre balayage spectral de la puissance de sortie de la fibre (2) sous une quatrième condition de perturbation, obtenue par introduction sur la fibre (2) de la seconde altération seulement.

4. Procédé selon l'une quelconque des revendications précédentes, caractérisé en ce que chaque altération est obtenu en contraignant la fibre à un parcours à serpentin.

5. Equipement pour la mise en oeuvre du procédé selon l'une quelconque des revendications 1 à 4, qui comporte une source lumineuse (1) qui envoie dans la fibre (2) en examen des radiations de longueurs d'onde différentes, un monochromateur (6) qui sélectionne les différentes longueurs d'onde, et un photodétecteur (8) qui reçoit les radiations en sortie de la fibre (2) et les transforme en un signal électrique et est associée à un système de mesure et de calcul (9, 10) qui mesure la puissance du signal éléctrique aux différentes longueurs d'onde et en obtient la fraction de puissance guidée dans le mode fondamental, le système de mesure et de calcul (9, 10) étant apte a obtenir cette fraction de puissance à partir de valeurs de la puissance du signal électrique obtenues, pour chaque longueur d'onde, sous au moins trous conditions de perturbation différentes, caractérisé en ce qu'un couple de dispositifs (4a, 4b), dans lesquels passe la fibre (2), est placé le long de la fibre (2), ces dispositifs pouvant être actionnés séparément pour introduire dans la fibre des perturbations de manière contrôlée et pouvant être répétée, et en ce que les deux dispositifs (4a, 4b) sont inactifs dans la première condition de perturbation, tandis que dans la deuxième condition seulement un dispositif est actif et dans la troisième condition les deux dispositifs (4a, 4b) sont actifs.

6. Equipement selon la revendication 5, caractérisé en ce que les dispositifs (4a, 4b) introduisent des perturbations égales sur la fibre (2) en examen.

7. Equipement selon les revendications 5 ou 6, caractérisé en ce que les dispositifs (4a, 4b), introduisent sur la fibre des courbures à rayon très faible.

8. Equipement selon la revendication 7, caractérisé en ce que les dispositifs (4a, 4b) comportant deux groupes (18a, 18b, 19) de surfaces cylindriques placées en vis-à-vis, par exemple des rouleaux, qui délimitent un guide où la fibre (2) en examen passe, un des deux groupes étant placé sur un support mobile (14) associé à des moyens (20, 21) permettant de modifier la distance entre les deux groupes de surfaces cylindriques (18a, 18b, 19) et indiquant la valeur de la distance.

9. Equipement selon l'une quelconque des revendications 5 à 8, caractérisé en ce que le système de mesure et de calcul (9, 10) peut obtenir, à partir des valeurs de la puissance du signal électrique calculées sous différentes conditions de perturbation, aussi les valeurs ($\gamma_a$, $\gamma_b$) des atténuations introduites par chaque perturbation sur les modes d'ordre supériéur.

FIG. 1

FIG. 2

FIG. 3

FIG. 4